# EUROPEAN PATENT APPLICATION

(11) **EP 2 427 031 A1**
(43) Date of publication of application: **07.03.2012**
(21) Application number: 10769751.8
(22) Date of filing: 27.04.2010
(51) Int. Cl.: H04W 92/16, H04W 16/26, H04W 36/06

(54) **MOBILE COMMUNICATION SYSTEM**

(30) Priority: 27.04.2009 JP 2009108557
(71) Applicant: NTT DOCOMO, INC., Chiyoda-ku Tokyo 100-6150 (JP)
(72) Inventor: HAPSARI, Wuri Andarmawanti, Tokyo 100-6150 (JP); TAKAHASHI, Hideaki, Tokyo 100-6150 (JP); UMESH, Anil, Tokyo 100-6150 (JP); IWAMURA, Mikio, Tokyo 100-6150 (JP); ISHII, Minami, Tokyo 100-6150 (JP)
(74) Representative: HOFFMANN EITLE
(86) International application number: PCT/JP2010/057485
(87) International publication number: WO 2010/126053

(57) **Abstract**

A radio base station according to the present invention comprising: a mobile communication system, a first relay node and a second relay node are connected via a radio bearer, the second relay node and a radio base station are connected via a radio bearer, a mobile station is configured to perform a handover process between the state in which a radio bearer is set with the first relay node in order to communicate via the first relay node, the second relay node, and the radio base station, and the state in which a radio bearer is set with the second relay node in order to communicate via the second relay node and the radio base station, and the mobile station is configured such that, during the handover process, control signals involved in the handover process are sent and received via the radio bearer between the first relay node and the second relay node.

## Description

### TECHNICAL FIELD

The present invention relates to a mobile communication system.

### BACKGROUND ART

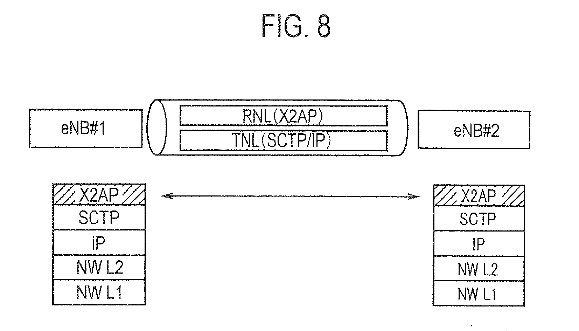

A mobile communication system of the LTE scheme (Release.8) defined by the 3GPP, as illustrated in Fig. 8, is configured such that when a handover process by a mobile station UE is carried out from a radio base station eNB#1 to a radio base station eNB#2, control signals involved in the handover process are sent and received between the radio base station eNB#1 and the radio base station eNB#2 via an X2 bearer that has been installed between the radio base station eNB#1 and the radio base station eNB#2.

As illustrated in Fig. 8, the radio base station eNB#1 and the radio base station eNB#2 include a network layer 1 (NW L1) function, a network layer 2 (NW L2) function, an IP (Internet Protocol) layer function, and an SCTP (Stream Control Transmission Protocol) layer function as the X2 bearer functions configured to establish the X2 bearer.

### PRIOR ART DOCUMENT

### NON-PATENT DOCUMENT

NON-PATENT DOCUMENT 1
3GPP TS36.423, "Technical Specification Group Radio Access Network; Evolved Universal Terrestrial Radio Access Network (E-UTRAN); X2 application protocol (X2AP)"

### SUMMARY OF THE INVENTION

### PROBLEMS TO BE SOLVED BY THE INVENTION

In the LTE-Advanced mobile communication system, which is the next-generation mobile communication system of the LTE scheme, "relay nodes RN" provided with the same functions as a radio base station eNB can establish a connection between a mobile station UE and the radio base station eNB.

However, the conventional mobile communication system has been problematic in that there is no regulation for how handover processes by the mobile station UE are to be handled when the relay nodes RN have been connected.

Therefore, the present invention is intended to overcome the above-described problem. An object of the present invention is to provide a mobile communication system capable of implementing handover processes by a mobile station even when relay nodes have been connected.

### MEANS FOR SOLVING THE PROBLEMS

The first feature of the present invention is summarized in that a mobile communication system, a first relay node and a second relay node are connected via a radio bearer, the second relay node and a radio base station are connected via a radio bearer, a mobile station is configured to perform a handover process between the state in which a radio bearer is set with the first relay node in order to communicate via the first relay node, the second relay node, and the radio base station, and the state in which a radio bearer is set with the second relay node in order to communicate via the second relay node and the radio base station, and the mobile station is configured such that, during the handover process, control signals involved in the handover process are sent and received via the radio bearer between the first relay node and the second relay node.

The first feature of the present invention is summarized in that the first relay node and the second relay node comprise a layer function configured to perform keep-alive process for the radio bearer, as an upper layer function of the functions configured to set the radio bearer.

The first feature of the present invention is summarized in that the first relay node and the second relay node comprises, a first layer function configured to perform security processes between the first relay node and the second relay node as an upper layer function of the functions configured to set the radio bearer and a second layer function configured to perform keep-alive process for the radio bearer as an upper layer function of the first layer function.

### EFFECTS OF THE INVENTION

As has been described above, according to the present invention, it is possible to provide a mobile communication system capable of implementing handover processes by a mobile station even when relay nodes have been connected.

### BRIEF DESCRIPTION OF THE DRAWINGS

[Fig. 1] Fig. 1 is a diagram showing the entire configuration of the mobile communication system according to a first embodiment of the present invention.
[Fig. 2] Fig. 2 is a diagram showing the protocol stack of the mobile communication system according to the first embodiment of the present invention.
[Fig. 3] Fig. 3 is a diagram showing the protocol stack of the mobile communication system according to the first embodiment of the present invention.
[Fig. 4] Fig. 4 is a diagram showing the protocol stack of the mobile communication system according to the first embodiment of the present invention.
[Fig. 5] Fig. 5 is a sequence diagram illustrating the operation of the mobile communication system according to the first embodiment of the present invention.
[Fig. 6] Fig. 6 is a sequence diagram illustrating the operation of the mobile communication system according to a second embodiment of the present invention.
[Fig. 7] Fig. 7 is a sequence diagram illustrating the operation of the mobile communication system according to a third embodiment of the present invention.
[Fig. 8] Fig. 8 is a diagram showing the protocol stack of a current mobile communication system.

### BEST MODES FOR CARRYING OUT THE INVENTION

### (Mobile communication system according to a first embodiment of the present invention)

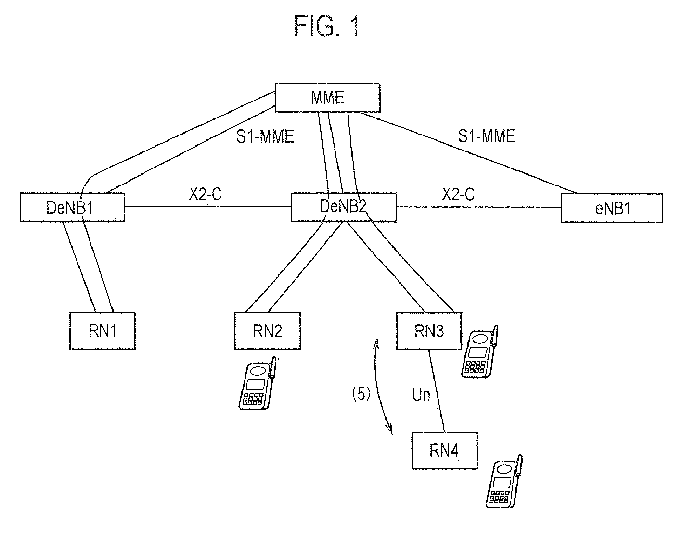

A description will be provided for the mobile communication system according to a first embodiment of the present invention, with reference to Fig. 1 to Fig. 5.

The mobile communication system according to the present invention is an LTE-Advanced mobile communication system including, for example, as illustrated in Fig. 1, a mobile switching center MME, relay nodes RN1 to RN4, a radio base station DeNB (Donor eNB) 1 that is connected to relay node RN1, a radio base station DeNB2 that is connected to the relay nodes RN2 and RN3, and a radio base station eNB1.

Herein, the radio base station DeNB1 and the radio base station DeNB2 are connected via an X2-C interface, and the radio base station DeNB2 and the radio base station eNB1 are connected via an X2-C interface.

Also, the radio base station DeNB1, the radio base station DeNB2, and the radio base station eNB1 are respectively connected with the mobile switching center MME via S1 interfaces.

In such a mobile communication system, the mobile station UE is configured to set a radio bearer between the radio base stations eNB (DeNB) and the relay nodes RN in order to perform radio communication.

Further, in such a mobile communication system, as illustrated by (5) of Fig. 1, the mobile station UE is configured to perform handover processes between the state in which a radio bearer is set with the relay node RN4 in order to communicate via the relay node RN4, the relay node RN3, and the radio base station DeNB2; and the state in which a radio bearer is set with the relay node RN3 in order to communicate via the relay node RN3 and the radio base station DeNB2.

Also, in such a handover process, control signals (X2AP signals) involved in the handover process are configured to be sent and received via an X2-C radio bearer (the radio bearer) between the relay node RN3 and the relay node RN4.

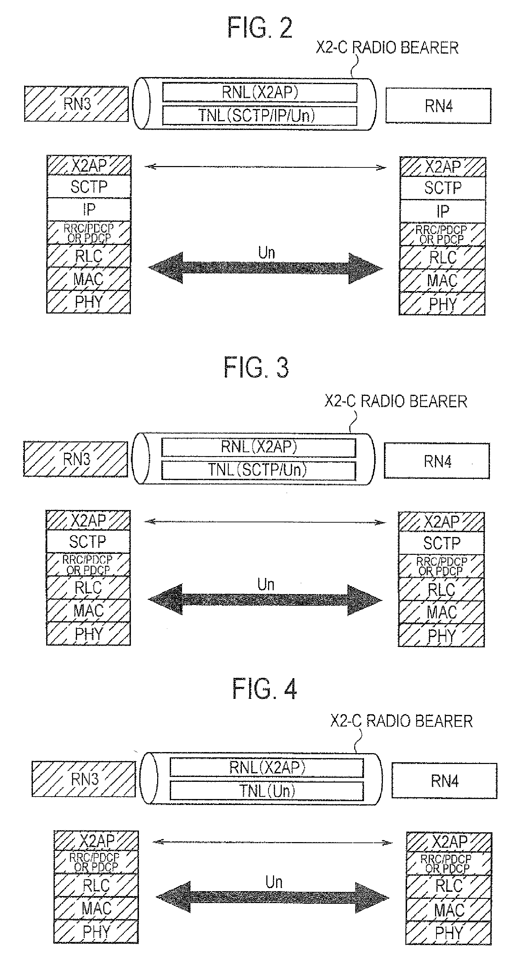

For example, as illustrated in Fig. 2 to Fig. 4, as X2-C radio bearer functions configured to set the X2-C radio bearer, the relay node RN3 and the relay node RN4 include a physical (PHY) layer function, an MAC (Media Access Control) layer function provided as an upper layer function of the physical (PHY) layer function, an RLC (Radio Link Control) layer function provided as an upper layer function of the MAC layer function, and a PDCP (Packet Data Convergence Protocol) layer function provided as an upper layer function of the RLC layer function.

Note that the relay node RN3 and the relay node RN4 may include an RRC (Radio Resource Control) layer function provided as an upper layer function of the PDCP layer function.

Moreover, as illustrated in Fig. 2, as an upper layer function of the X2-C radio bearer functions, the relay node RN3 and the relay node RN4 may include an IP layer function (a first layer function) configured to perform security processes between the relay node RN3 and the relay node RN4, and may include an SCTP layer function (a second layer function) configured to perform keep-alive processes for the X2-C radio bearer as an upper layer function of the IP layer function.

Alternatively, as illustrated in Fig. 3, the relay node RN3 and the relay node RN4 may include an SCTP layer function configured to perform keep-alive processes for the X2-C radio bearer as an upper layer function of the X2-C radio bearer functions. In the example in Fig. 3, the relay node RN3 and the relay node RN4 do not include an IP layer function configured to perform security processes between the relay node RN2 and the radio base station DeNB2.

Further, as illustrated in Fig. 4, the relay node RN3 and the relay node RN4 need not include the SCTP layer function configured to perform keep-alive processes for the X2-C radio bearer as an upper layer function of the X2-C radio bearer functions, and with the IP layer function configured to perform security processes between the relay node RN3 and the relay node RN4.

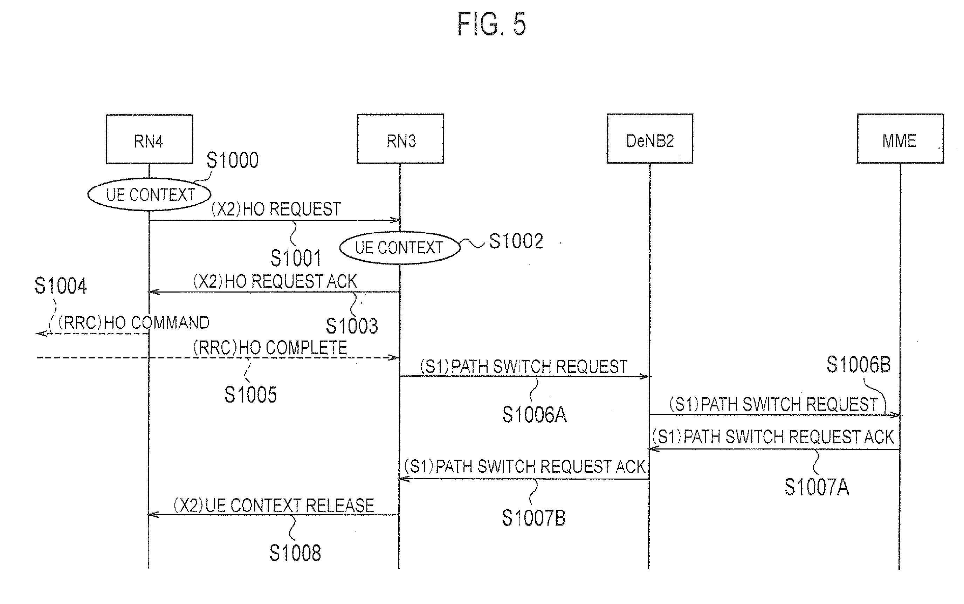

A description is given below with reference to Fig. 5 for the operation in the mobile communication system according to this embodiment where the mobile station UE hands over from the state in which a radio bearer has been set with the relay node RN4 in order to communicate via the relay node RN4, the relay node RN3, and the radio base station DeNB2, to the state in which a radio bearer has been set with the relay node RN3 in order to communicate via the relay node RN3 and the radio base station DeNB2.

As illustrated in Fig. 5, the relay node RN4 manages the "UE Context" of the mobile station UE in step S1000, and sends an "HO Request (handover request signal)" to the relay node RN3 via the X2-C radio bearer requesting a handover by the mobile station UE from the relay node RN4 to the relay node RN3 in step S1001.

The relay node RN3, upon receiving the "HO Request", stores the "UE Context" of the mobile station UE in step S1002, and sends an "HO Request Ack (handover request acknowledgement signal)" to the relay node RN4 via the X2-C radio bearer in step S1003.

In step S1004, the relay node RN4 sends an "HO Command (handover instruction signal)" instructing the mobile station UE to perform a handover by means of the RRC layer function to the relay node RN3.

In step S1005, the mobile station UE sends an "HO Complete (handover completion signal)" to the relay node RN3 by means of the RRC layer function.

In step S1006A, the relay node RN3 sends a "Path Swith Request (path switch request signal)" to the radio base station DeNB2 via the S1 interface, and then in step S1006B, the radio base station DeNB2 sends the "Path Swith Request (path switch request signal)" to the mobile switching center MME via the S1 interface.

In step S1007A, the mobile switching center MME sends a "Path Swith Request Ack (path switch request acknowledgement signal)" to the radio base station DeNB2 via the S1 interface, and then in step S1007B, the radio base station DeNB2 sends the "Path Swith Request Ack (path switch request acknowledgement signal)" to the relay node RN3 via the S1 interface, and also switches the transfer destination of signals addressed to the mobile station UE from the relay node RN4 to the relay node RN3.

In step S1008, the relay node RN3 sends a "UE Context Release" to the relay node RN4 via the X2-C radio bearer, such that the relay node RN4 terminates management of the "UE Context" of the mobile station UE in response to the "UE Context Release".

In addition, in Fig. 5, the relay node RN4 and the relay node RN3 may be interchanged.

According to the mobile communication system of this embodiment, it is possible to implement a handover process involving the relay nodes RN without performing a major renovation of the protocol stack of each device used in the LTE mobile communication system.

Further, according to the mobile communication system of this embodiment, there is no need to set an X2-C radio bearer between the relay node RN3 and the relay node RN4 during the handover process by the mobile station UE, and therefore the handover process can be performed quickly.

### (Mobile communication system according to a second embodiment of the present invention)

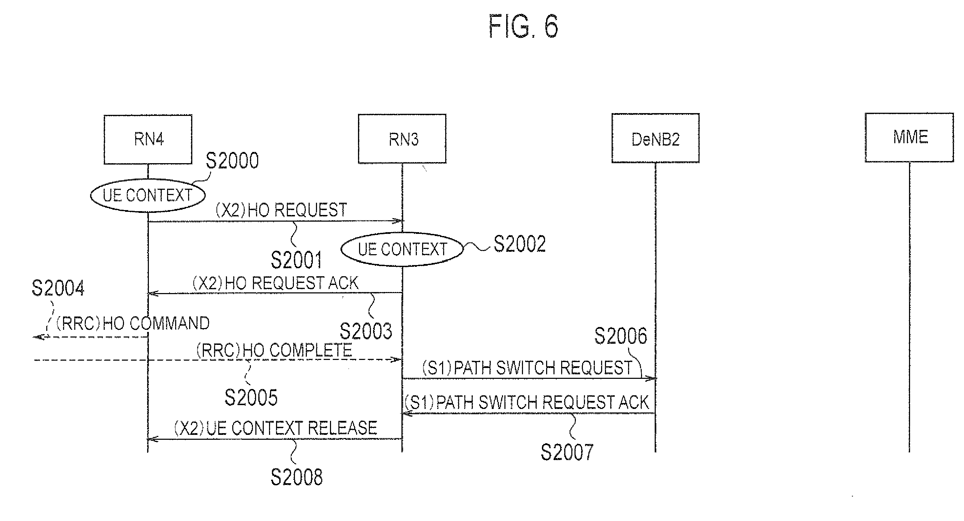

A description will be provided for the mobile communication system according to a second embodiment of the present invention, with reference to Fig. 6. The mobile communication system according to this embodiment will be described by focusing on the points of difference from the mobile communication system according to the first embodiment described above.

Specifically, a description is given with reference to Fig. 6 for the operation in the mobile communication system according to this embodiment where the mobile station UE hands over from the state in which a radio bearer has been set with the relay node RN4 in order to communicate via the relay node RN4, the relay node RN3, and the radio base station DeNB2, to the state in which a radio bearer has been set with the relay node RN3 in order to communicate via the relay node RN3 and the radio base station DeNB2.

As illustrated in Fig. 6, the relay node RN4 manages the "UE Context" of the mobile station UE in step S2000, and sends an "HO Request" to the relay node RN2 via the X2-C radio bearer requesting a handover by the mobile station UE from the relay node RN4 to the relay node RN3 in step S3001.

The relay node RN3, upon receiving the "HO Request", stores the "UE Context" of the mobile station UE in step S2002, and sends an "HO Request Ack" to the relay node RN4 via the X2-C radio bearer in step S2003.

In step S2004, the relay node RN4 sends an "HO Command" to the mobile station UE by means of the RRC layer function to command a handover to the relay node RN3.

In step S2005, the mobile station UE sends an "HO Complete" to the relay node RN3 by means of the RRC layer function.

In step S2006, the relay node RN3 sends a "Path Swith Request" to the radio base station DeNB2 via the S1 interface.

In step S2007, the radio base station DeNB2 sends a "Path Swith Request Ack" to the relay node RN3 via the S1 interface, and also switches the transfer destination of signals addressed to the mobile station UE from the relay node RN4 to the relay node RN3.

Herein, the radio base station DeNB2 determines that the relay nodes RN3 and RN4 are subordinate to it, and therefore does not send a "Path Swith Request Ack" to the mobile switching center MME.

In step S2008, the relay node RN3 sends a "UE Context Release" to the relay node RN4 via the X2-C radio bearer, such that the relay node RN4 terminates management of the "UE Context" of the mobile station UE in response to the "UE Context Release".

In addition, in Fig. 6, the relay node RN4 and the relay node RN3 may be interchanged.

### (Mobile communication system according to a third embodiment of the present invention)

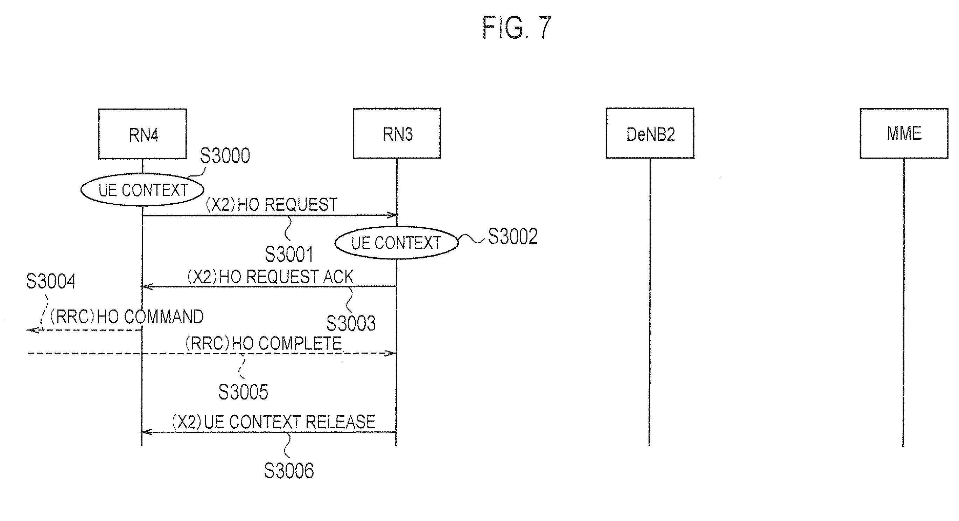

A description will be provided for the mobile communication system according to a third embodiment of the present invention, with reference to Fig. 7. The mobile communication system according to this embodiment will be described by focusing on the points of difference from the mobile communication system according to the first embodiment described above.

Specifically, a description is given with reference to Fig. 7 for the operation in the mobile communication system according to this embodiment where the mobile station UE hands over from the state in which a radio bearer has been set with the relay node RN4 in order to communicate via the relay node RN4, the relay node RN3, and the radio base station DeNB2, to the state in which a radio bearer has been set with the relay node RN3 in order to communicate via the relay node RN3 and the radio base station DeNB2.

As illustrated in Fig. 7, the relay node RN4 manages the "UE Context" of the mobile station UE in step S3000, and sends an "HO Request" to the relay node RN3 via the X2-C radio bearer requesting a handover by the mobile station UE from the relay node RN4 to the relay node RN3 in step S3001.

The relay node RN3, upon receiving the "HO Request", stores the "UE Context" of the mobile station UE in step S3002, and sends an "HO Request Ack" to the relay node RN4 via the X3-C radio bearer in step S2003.

In step S3004, the relay node RN4 sends an "HO Command" to the mobile station UE by means of the RRC layer function to command a handover to the relay node RN3.

In step S3005, the mobile station UE sends an "HO Complete" to the relay node RN3 by means of the RRC layer function.

Herein, the relay node RN3 determines that the relay node RN4 is subordinate to it and therefore does not send a "Path Swith Request Ack" to the radio base station DeNB2.

In step S3006, the relay node RN3 switches the transfer destination of signals addressed to the mobile station UE from the relay node RN4 to the cell subordinate to the relay node RN3, and sends a "UE Context Release" to the relay node RN4 via the X2-C radio bearer, such that the relay node RN4 terminates management of the "UE Context" of the mobile station UE in response to the "UE Context Release".

In addition, in Fig. 7, the relay node RN4 and the relay node RN3 may be interchanged.

Note that operation of the above described the mobile station UE, the relay node RN, the radio base station eNB and the mobile switching center MME may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the mobile station UE, the relay node RN, the radio base station eNB and the mobile switching center MME. Also, the storage medium and the processor may be provided in the mobile station UE, the relay node RN, the radio base station eNB and the mobile switching center MME as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A mobile communication system, wherein
a first relay node and a second relay node are connected via a radio bearer,
the second relay node and a radio base station are connected via a radio bearer,
a mobile station is configured to perform a handover process between the state in which a radio bearer is set with the first relay node in order to communicate via the first relay node, the second relay node, and the radio base station, and the state in which a radio bearer is set with the second relay node in order to communicate via the second relay node and the radio base station, and
the mobile station is configured such that, during the handover process, control signals involved in the handover process are sent and received via the radio bearer between the first relay node and the second relay node.

2. The mobile communication system according to claim 1, wherein
the first relay node and the second relay node comprise a layer function configured to perform keep alive process for the radio bearer, as an upper layer function of the functions configured to set the radio bearer.

3. The mobile communication system according to claim 1, wherein
the first relay node and the second relay node comprises
a first layer function configured to perform security processes between the first relay node and the second relay node as an upper layer function of the functions configured to set the radio bearer; and
a second layer function configured to perform keep alive process for the radio bearer as an upper layer function of the first layer function.
